# EUROPEAN PATENT SPECIFICATION

(11) **EP 3 512 144 B1**
(45) Date of publication and mention of the grant of the patent: **02.12.2026**
(21) Application number: 17855000.0
(22) Date of filing: 29.09.2017
(51) Int. Cl.: H04L 5/00, H04W 72/04

(54) **REFERENCE SIGNAL PROCESSING METHOD, USER EQUIPMENT, AND BASE STATION**
REFERENZSIGNALVERARBEITUNGSVERFAHREN, BENUTZERGERÄT UND BASISSTATION
PROCÉDÉ DE TRAITEMENT DE SIGNAL DE RÉFÉRENCE, ÉQUIPEMENT UTILISATEUR ET STATION DE BASE

(30) Priority: 29.09.2016 CN 201610873154
(43) Date of publication of application: 17.07.2019
(73) Proprietor: Huawei Technologies Co., Ltd., Longgang District Shenzhen, Guangdong 518129 (CN)
(72) Inventor: ZHANG, Xu, Shenzhen Guangdong 518129 (CN); QU, Bingyu, Shenzhen Guangdong 518129 (CN)
(74) Representative: Gill Jennings & Every LLP
(86) International application number: PCT/CN2017/104423
(87) International publication number: WO 2018/059550

(56) References cited:
- EP-A1- 3 119 121
- WO-A1-2015/149349
- CN-A- 102 845 011
- CN-A- 103 347 298
- CN-A- 104 010 363
- CN-A- 105 723 639
- HUAWEI ET AL: "CSI-RS design for 12 and 16 ports", vol. RAN WG1, no. Beijing, China; 20150824 - 20150828, 23 August 2015 (2015-08-23), XP051001238, Retrieved from the Internet <URL:http://www.3gpp.org/ftp/Meetings_3GPP_SYNC/RAN1/Docs/> [retrieved on 20150823]

## Description

### TECHNICAL FIELD

This application relates to the communications field, and more specifically, to a reference signal processing method, user equipment, and a base station.

### BACKGROUND

The Long Term Evolution (Long Term Evolution, LTE) system standard stipulated by the 3rd Generation Partnership Project (the 3rd Generation Partnership Project, 3GPP) is considered as a fourth-generation wireless access system standard. In current LTE, it is stipulated that a downlink transmission waveform uses orthogonal frequency division multiple access (Orthogonal Frequency Division Multiple Access, OFDMA), and an uplink transmission waveform uses single carrier frequency division multiple access (Singlecarrier Frequency Division Multiple Access, SC-FDMA). Based on the foregoing transmission modes, a time frequency resource in a system may be divided into a plurality of resource elements. The resource element occupies one orthogonal frequency division multiplexing (Orthogonal Frequency Division Multiplexing, OFDM) symbol in time domain, and occupies one subcarrier in frequency domain. A width of the subcarrier is 15 KHz.

The LTE system is widely deployed within a frequency band range less than 6 GHz. However, based on dividable frequency spectrum distribution, a carrier frequency of a fifth-generation wireless access system is very likely higher than that of a fourth-generation wireless access system, and a to-be-selected carrier frequency range includes 30 GHz, 60 GHz, and a nearby carrier frequency. A high carrier frequency signal more greatly fades in free space. Therefore, a coverage hole problem caused by a high path loss needs to be resolved. Because a wavelength of a high carrier frequency is of a centimeter scale and a millimeter scale, more antenna array elements can be disposed in a 5G device than those disposed in a 3G device and a 4G device whose sizes are the same as that of the 5G device. Therefore, a common method is that an antenna array including a large quantity of antenna array elements is used for a high carrier frequency, a signal gain is obtained by forming a beam with high directionality by using the antenna array, and the signal gain may reach at least 20 dB, to compensate for a high carrier frequency path loss. However, when a directional beam having a high signal gain is formed by using the antenna array, a width of the beam is also decreased. Therefore, directions of to-be-sent and to-be-received beams need to be trained before data transmission, until a transmit end and/or a receive end finds a beam direction in which a signal gain is the maximum.

In the prior art, user equipment (User Equipment, UE) maps a reference signal to subcarriers having same intervals, bringing time domain signal waveform repetitions, and the repeated waveforms can be used for beam training for different beams. Specifically, when the UE needs N beam training signals (where N is greater than 1), the UE maps a reference signal to a plurality of subcarriers having N subcarrier spacings, so that it is determined that a corresponding OFDM symbol is divided into N beam training signals used for N beams. Therefore, when the user equipment uses such a mapping manner, although each of every N subcarriers carries the reference signal, time frequency resources of other subcarriers cannot be used by another user, causing a waste of resources.

HUAWEI ET AL: "CSI-RS design for 12 and 16 ports", 3GPP DRAFT; R1-153792, 23 August 2015, retrieved from the Internet: URL:http://www.3gpp.org/ftp/Meetings_3GPP SYNC/RAN1/Docs describes CSI-RS design for 12 and 16 ports.

### SUMMARY

Implementations of this application provide a reference signal processing method, user equipment, and a base station, to improve time frequency resource utilization for beam training.

Various aspects of the present invention have been defined in the independent claims. Further technical features of each of these aspects have been defined in the respective dependent claims.

Based on the foregoing technical solutions, the UE can multiplex a time frequency resource with another user equipment according to the indication of the base station, thereby improving the time frequency resource utilization.

### BRIEF DESCRIPTION OF DRAWINGS

FIG. 1 is a schematic diagram of time frequency resource division based on an LTE system;
FIG. 2 is a schematic scenario diagram of multi-beam training;
FIG. 3 is a schematic interaction flowchart of a reference signal processing method according to an implementation of this application;
FIG. 4 is a schematic structural diagram of a subcarrier according to an implementation of this application;
FIG. 5 is a schematic structural diagram of a subcarrier according to another implementation of this application;
FIG. 6 is a schematic structural diagram of a subcarrier according to still another implementation of this application;
FIG. 7 is a schematic structural diagram of a subcarrier according to still another implementation of this application;
FIG. 8 is a schematic structural diagram of a subcarrier according to still another implementation of this application;
FIG. 9 is a waveform diagram of a time domain signal according to an implementation of this application;
FIG. 10 is a waveform diagram of a time domain signal according to another implementation of this application;
FIG. 11 is a schematic structural diagram of a subcarrier according to still another implementation of this application;
FIG. 12 is a schematic structural diagram of a subcarrier according to still another implementation of this application;
FIG. 13 is a waveform diagram of a time domain signal according to another implementation of this application;
FIG. 14 is a schematic block diagram of UE according to an implementation of this application;
FIG. 15 is a schematic block diagram of a base station according to an implementation of this application;
FIG. 16 is a schematic block diagram of a system according to an implementation of this application;
FIG. 17 is a schematic structural diagram of UE according to an implementation of this application; and
FIG. 18 is a schematic structural diagram of a base station according to an implementation of this application.

### DESCRIPTION OF IMPLEMENTATIONS

To make the objectives, technical solutions, and advantages of this invention clearer, the following further describes various implementations in detail with reference to the accompanying drawings. The implementations described below are not all claimed, they are included to help understanding the context of the invention. While the description refers to various implementations, the embodiments of the invention are those which comprise at least all the features of an independent claim. Any implementation which does not fall within the scope of the claims does not form part of the invention, but rather included as an illustrative example that is useful for understanding the invention.

It should be understood that, a wireless communications system in the implementations of this application can be applied to various wireless communications solutions for communication, for example, a Global System for Mobile Communications (Global System for Mobile communication, GSM), a Code Division Multiple Access (Code Division Multiple Access, CDMA) system, a Wideband Code Division Multiple Access (Wideband Code Division Multiple Access Wireless, WCDMA) system, a general packet radio service (GPRS, General Packet Radio Service) system, a Long Term Evolution (Long Term Evolution, LTE) system, and a wireless local area network (Wireless Local Area Network, WLAN).

It should be further understood that, in the implementations of this application, a transmit end device may be referred to as an access terminal, user equipment (User Equipment, UE), a subscriber unit, a subscriber station, a mobile station, a mobile console, a remote station, a remote terminal, a mobile device, a user terminal, a terminal, a wireless communications device, a user agent or a user apparatus, a handheld device having a wireless communication function, a computing device or another processing device connected to a wireless modem, an in-vehicle device, a wearable device, or a terminal device in a future 5G network. A receive end device may alternatively be a base transceiver station (Base Transceiver Station, BTS) in a GSM system or a CDMA system, a NodeB (NodeB) in a WCDMA system, an evolved NodeB (Evolved Node B, eNB) in an LTE system, a base station device in a future 5G network, or the like.

For ease of understanding the implementations of this application, the following elements are first described before the implementations of this application are described.

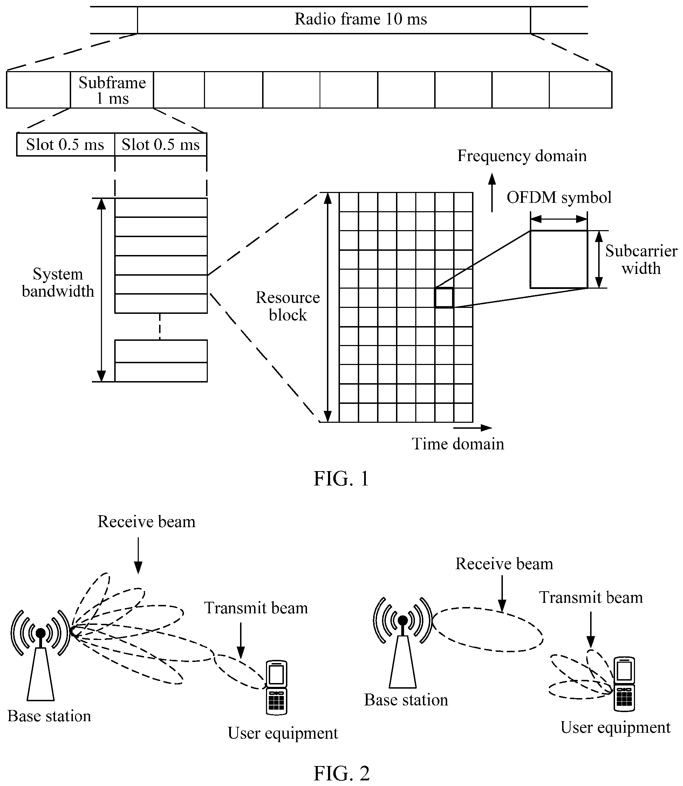

FIG. 1 is a schematic diagram of time frequency resource division based on an LTE system. As shown in FIG. 1, a radio frame (frame) is a 10-millisecond (ms) delay. A radio frame is divided into 10 subframes, and each subframe occupies a 1-ms delay. Each subframe may further continue to be divided into two slots (slot), and each slot may include different quantities of OFDM symbols. A time frequency resource in an LTE system may be divided into a plurality of resource blocks, each resource block may further be divided into a plurality of resource elements, and each resource element occupies an OFDM symbol in time domain and occupies a subcarrier in frequency domain. On a resource block, one OFDM symbol may correspond to a plurality of subcarriers.

In an NR (New Radio) system (which is also referred to as a 5G system), a radio frame has a length of 10 milliseconds in time domain, and a subframe has a length of 1 millisecond in time domain. A slot includes 14 or 12 OFDM symbols. A length of a slot in time domain depends on a configured subcarrier width. For example, for a system having a 15-KHz subcarrier width, a slot including 14 OFDM symbols has a length of 1 ms in time domain. When a subcarrier width is increased, a length of a slot in time domain is decreased. For example, for a system having a 30-KHz subcarrier width, a slot including 14 OFDM symbols in time domain has a length of 0.5 millisecond. The invention solution is not limited to being applied to an LTE evolved system or a 5G NR system.

FIG. 2 is a schematic scenario diagram of multi-beam training according to an implementation of this application. A transmit end sends a reference signal in a beam direction, and a receive end may receive reference signals in a plurality of beam directions, so that an optimal receiving direction for receiving the reference signal by the receive end can be determined. Alternatively, a transmit end may send reference signals in a plurality of beam directions, and a receive end receives a reference signal in a beam direction, so that an optimal beam direction for sending the reference signal by the transmit end can be determined.

Beam training may be that a transmit end sends reference signals in different beam directions, a receive end determines, based on the received reference signal, a beam direction in which a signal gain is the maximum, and then transmits data in the beam direction in which the signal gain is the maximum, thereby ensuring data transmission efficiency. In the implementations of this application, an example in which the transmit end is user equipment and the receive end is a base station is used for description. However, this application is not limited thereto.

It should be understood that, beamforming is an antenna array-based signal preprocessing technology. In the technology, a directional beam is generated by adjusting weights of to-be-sent signals on all antenna array elements. In the implementations of this application, "the user equipment performs sending in a beam direction" is expressed as "using a beam" for description.

In the prior art, specifically, when UE needs N beam training signals (where N is greater than 1), the UE maps a reference signal to a plurality of subcarriers having N subcarrier spacings, so that it is determined that a corresponding OFDM symbol in time domain is divided into N beam training signals used for N beams. Therefore, when the user equipment uses such a mapping manner, although each of every N subcarriers carries the reference signal, time frequency resources of other subcarriers cannot be used by another user, causing a waste of resources.

It should be noted that, in an implementation, "N subcarrier spacings" may be specifically an interval of N subcarriers.

The number of training beams varies due to the different service cell locations of the UE. For example, if the user equipment is at the edge of the cell, the limited transmit power makes it difficult to meet the transmit energy requirements for training multiple beams. Even if it is configured to map a reference signal every four subcarriers, it is impossible to train four beams. In this case, the present application supports frequency division multiplexing of reference signals of multiple users.

In an implementation, due to different locations of the UE in a serving cell, quantities and capabilities of training beams may be different. This may be due to different signal path losses, the UE at a cell edge cannot train a relatively large quantity of beams in a unit time (for example, within an OFDM symbol).

It should be understood that, in the implementations of this application, each of N divided time domain signals of an OFDM symbol may be referred to as a "time segment", or may have another name having the function, or the like. This is not limited in this application.

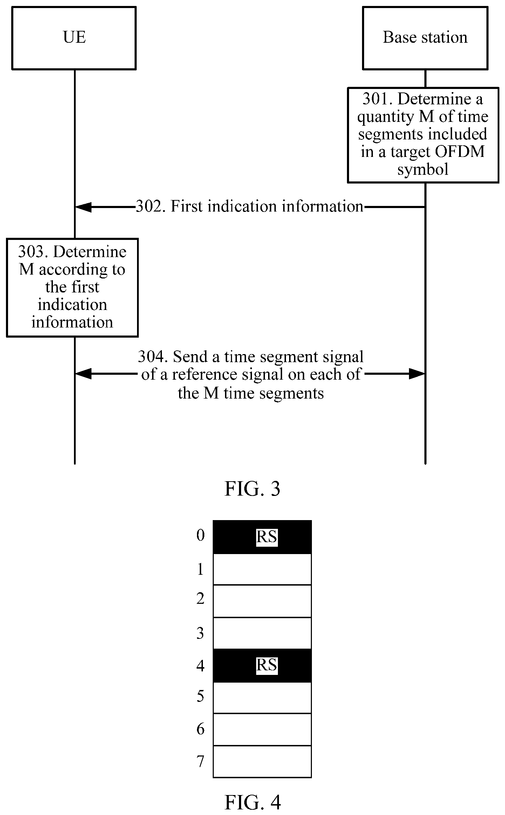

FIG. 3 is a schematic interaction flowchart of a reference signal processing method according to an implementation of this application.

301. A base station determines a quantity M of time segments included in a target OFDM symbol, where M≤N.

In this implementation of this application, the target OFDM symbol may be any OFDM symbol in a system, or may be an OFDM symbol determined by the base station based on some requirements. In an LTE system, an OFDM symbol corresponds to a plurality of subcarriers. Subcarriers corresponding to the target OFDM symbol may be all subcarriers corresponding to the target OFDM symbol in system bandwidth, or may be all subcarriers on a resource block corresponding to the target OFDM symbol on the resource block.

Optionally, subcarriers corresponding to the target OFDM symbol may alternatively be all subcarriers on a plurality of physical resource blocks corresponding to the target OFDM symbol on the resource blocks.

N may be notified by using signaling or predefined.

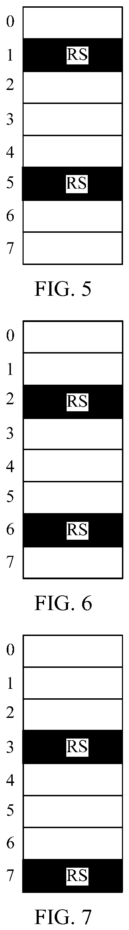

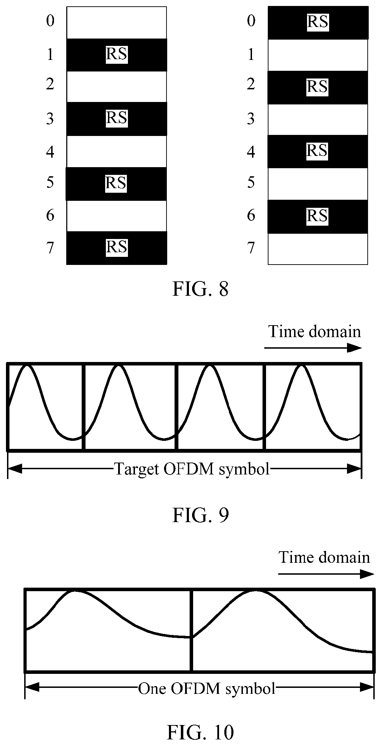

In the prior art, a quantity of time segments divided from the target OFDM symbol is the same as a quantity of subcarrier spacings between neighboring subcarriers used to carry a reference signal and corresponding to the target OFDM symbol in frequency domain. For example, using eight subcarriers corresponding to the OFDM symbol as an example for description, for ease of description, the eight subcarriers are numbered as 0, 1, ..., and 7. Using an example in which a length of a reference signal (Reference Signal, RS) occupies two subcarriers, the subcarriers carrying the RS are a subcarrier numbered 0 and a subcarrier numbered 4, and there are four subcarrier spacings between the subcarrier numbered 0 and the subcarrier numbered 4, as shown in FIG. 4. The subcarriers carrying the RS are a subcarrier numbered 1 and a subcarrier numbered 5, and there are four subcarrier spacings between the subcarrier numbered 1 and the subcarrier numbered 5, as shown in FIG. 5. In addition, a location combination of another group of subcarriers carrying the reference signal is shown in FIG. 6. A waveform diagram corresponding to a time domain reference signal generated in the reference signal mapping manner in FIG. 4, FIG. 5, FIG. 6, or FIG. 7 is shown in FIG. 9. If the reference signal mapping manner is any manner in FIG. 8, a corresponding time domain reference signal waveform diagram is FIG. 10.

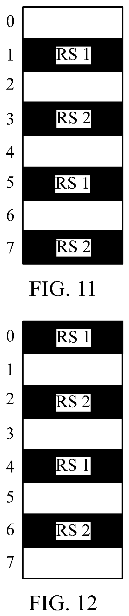

If a time frequency resource serves only current UE (which is referred to as UE 1 below), when the reference signal mapping manner is shown in FIG. 4, a corresponding time domain signal waveform diagram is FIG. 9. If the time frequency resource serves only another UE (which is referred to as UE 2 below), when a mapping manner used by the UE 2 is shown in FIG. 6, a corresponding time domain signal waveform diagram is also FIG. 9. However, if the time frequency resource serves both the UE 1 and the UE 2, each UE does not need to learn of existence of the other UE, and the base station may learn that both the UE 1 and the UE 2 occupy a resource of a same symbol (as shown in FIG. 11 or FIG. 12). An RS 1 is a reference signal corresponding to the UE 1, and an RS 2 is a reference signal corresponding to the UE 2. A waveform diagram corresponding to a time domain signal received by the base station is shown in FIG. 10. Each waveform in FIG. 10 is signal superposition of the RS 1 and the RS 2. Therefore, the base station can still determine beam training results for different UEs based on the time domain signal.

Therefore, the base station may reconfigure, based on a time frequency resource occupation status of the current UE, a time frequency resource for use by another UE. The base station may configure the quantity M of time segments divided from the target OFDM symbol, and M≤N, so that another UE can multiplex the time frequency resource, thereby improving time frequency resource utilization.
It should be noted that, the reference signals may be reference signals of a same type or reference signals of different types that correspond to the UE. This is not limited in this application.

It should be understood that, the reference signal may be a channel state information reference signal (Channel Status Information Reference Signal, CSI-RS), a common reference signal (Common Reference Signal, CRS), or the like. This is not limited in this implementation of this application.

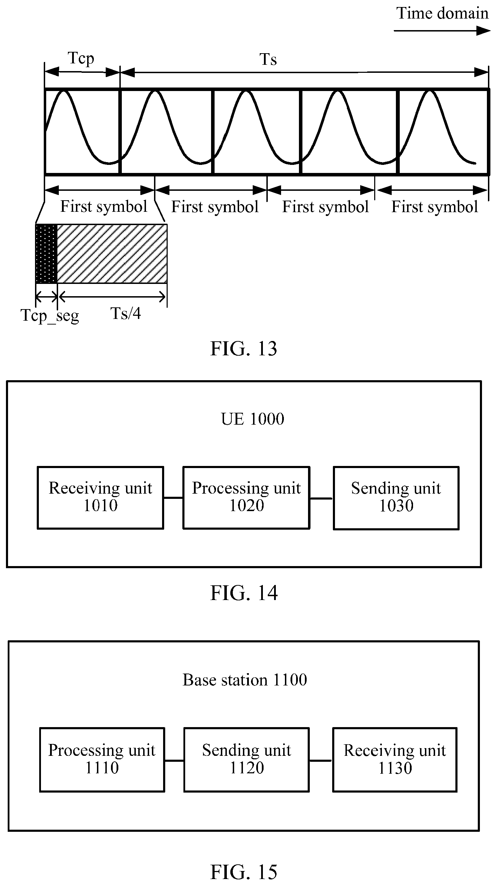

As shown in FIG. 13, this implementation of this application may further be applied to a scenario in which a cyclic prefix (Cyclic Prefix, CP) is inserted before a first symbol. A length of the first symbol is marked as Tseg, where Tseg=(T_{CP}+Ts)/L, and L is a quantity of first symbols in a time domain OFDM symbol. Reference signals on the L first symbols form a reference signal on the time domain OFDM symbol, and a length of the cyclic prefix on the first symbol is T_{CP} seg=Tseg-Ts/L. Usually, there is a length set {t1, t2, ..., tL} for lengths of the L first symbols, where t1+t2+...+tL=(T_{CP}+Ts), each element in the length set is greater than Ts/N, and N is a quantity of subcarrier spacings between neighboring subcarriers to which the reference signal is mapped in frequency domain.

It should be noted that, meaning of the first symbol herein is the same as meaning of the "time segment" in the implementations of this application.

302. The base station sends first indication information to UE, where the first indication information is used to instruct the UE to determine M.

After determining the quantity M of time segments divided from the target OFDM symbol, the base station sends the first indication information to the UE, and the first indication information may instruct the UE to determine a quantity of time segments to which the target OFDM symbol may be divided for beam training.

Optionally, the first indication information may be downlink control information (Downlink Control Information, DCI), or may be higher layer signaling, or the like. This is not limited in this application.

Optionally, in an implementation, the first indication information includes a plurality of bits. That the UE determines M according to the first indication information includes: determining, by the UE, M based on values of the plurality of bits.
Specifically, the base station sends the first indication information to the UE, and the first indication information is used to indicate the quantity of time segments divided from the target OFDM symbol. The first indication information may be a direct indication or an indirect indication. For example, in this implementation of this application, the base station may perform indication by using a plurality of bits. Specifically, M is determined based on values of the bits. A quantity of the bits may be determined based on a possible value of the quantity of time segments divided from the target OFDM symbol.

For example, if the first indication information is downlink control information, when the value of the quantity of time segments divided from the target OFDM symbol may be 1, 2, and 4, the value is represented by using two bits (as shown in Table 1): 00 indicates one time segment, 01 indicate two time segments, 10 indicates four time segments, and 11 indicates that the two bits may be used to be expanded for another function, or the like (indicated as reserved).

**Table 1**

| Bit | Quantity of time segments included in the target OFDM symbol |
|---|---|
| 00 | 1 |
| 01 | 2 |
| 10 | 4 |
| 11 | Reserved |

It should be understood that, the quantity of the bits included in the first indication information is not limited in this implementation of this application.

303. The UE determines M according to the first indication information.

The UE receives the first indication information sent by the base station, and determines, according to the first indication information, the quantity of time segments divided from the target OFDM symbol.

Optionally, the method further includes: receiving, by the UE, second indication information sent by the base station, where the second indication information is used to indicate a frequency domain offset of a start location of the first subcarrier set in frequency domain, and the frequency domain offset is a quantity of subcarrier spacings between the start location and a reference location; determining, by the UE, the start location of the first subcarrier set in frequency domain based on the frequency domain offset; and determining, by the UE, a time segment signal of a reference signal based on the start location of the first subcarrier set in frequency domain.

Specifically, the base station may select the start location of the first subcarrier set in frequency domain for the UE, and indicate the frequency domain offset of the start location of the first subcarrier set in frequency domain by sending the second indication information to the UE. In this way, the UE determines the start location of the first subcarrier set in frequency domain based on the frequency domain offset, and determines the time segment signal of the reference signal based on the start location of the first subcarrier set in frequency domain.

Optionally, when the frequency domain offset of the start location of the first subcarrier set in frequency domain is a first frequency domain offset, M is any element in a first time segment quantity set; or when the offset of the start location of the first subcarrier set in frequency domain is a second frequency domain offset, M is any element in a second time segment quantity set; and the first time segment quantity set is different from the second time segment quantity set, and the first frequency domain offset is different from the second frequency domain offset.

The base station may predetermine a mapping relationship between the frequency domain offset and the time segment quantity set, so that the base station can determine, based on the mapping relationship, time segment quantity sets corresponding to different frequency domain offsets, to determine M based on the time segment quantity set, and M may be any one of the time segment quantity sets.

It should be understood that, quantities of time segments in the time segment quantity sets corresponding to the different frequency domain offsets may be the same or may be different. This is not limited in this application.

An element of a reference signal sequence is mapped at an interval of N subcarriers. For example, a start location, that is, a reference location, of a reference signal during frequency resource mapping is represented as k₀, and if a value set of a corresponding quantity of first symbols is marked as {1, 2, 4, 8, ..., N}, where N is 2ⁿ and n is a positive integer, for a reference signal whose start location is k₀+N/2^{k}, a value set of a corresponding quantity of first symbols may be {1, 2, 4, 8, ..., N/2^{k}}, and k is a positive integer and k<n.

Optionally, the reference location may alternatively be represented by using a number of a reference subcarrier.

Optionally, if N/2^{k} is not an integer, an integer may be obtained by using $\left⌊N/{2}^{k}\right⌋$.

For example, eight subcarriers are used as a unit. To avoid interference to another resource block and factors such as phase rotation considered in an actual application, the mapping relationship between the frequency domain offset and the time segment quantity set is shown in Table 2.

**Table 2**

| Frequency domain offset | Time segment quantity set |
|---|---|
| 0 | {4, 2, 1} |
| 1 | {1} |
| 2 | {2, 1} |
| 3 | {1} |

Usually, the frequency domain offset is a quantity of subcarriers between k0 and a location of a subcarrier to which a first reference location is mapped in frequency domain, and k₀ may be a value notified by the base station or a predefined value. For example, 0, 1, 2, 3 in Table 2 are represented as k₀, k₀+1, k₀+2, and k₀+3.

Optionally, that the base station determines M based on the mapping relationship includes: determining, by the base station based on the mapping relationship, a target time segment quantity set corresponding to the frequency domain offset of the start location of the first subcarrier set in frequency domain; and determining, by the base station, M based on the target time segment quantity set, where M≤L, and L is a largest value of a plurality of values in the target time segment quantity set.

Specifically, the value of M that the base station can indicate may be a value in the target quantity set, and the value is less than or equal to the largest value in the target time segment quantity set. If the frequency domain offset in Table 2 is 2, the value of M is 2 or 1.

Optionally, the second indication information may include a plurality of bits, and a first subcarrier carrying the reference signal is determined by using values of the plurality of bits. For details, as shown in Table 3. The plurality of bits may be two bits.

**Table 3**

| Bit | Frequency domain offset |
|---|---|
| 00 | 0 |
| 01 | 1 |
| 10 | 2 |
| 11 | 3 |

It should be understood that, a quantity of the bits included in the second indication information is not limited in this implementation of this application.

It should be further understood that, the second indication information and the first indication information may be separately sent in sequence, or may be sent at a same time by being carried in a same message. This is not limited in this application.

Optionally, the second indication information and the first indication information may be same indication information. Through joint encoding, one indication information is used to indicate a subcarrier number and a quantity of beam directions, for example, as shown in Table 4. The base station may indicate, by using three bits, both a subcarrier number and a possible value of a quantity of beam directions of the first subcarrier carrying the reference signal.

**Table 4**

| Bit | Frequency domain offset | Quantity of time segments |
|---|---|---|
| 000 | 0 | 4 |
| 001 | 0 | 2 |
| 010 | 0 | 1 |
| 011 | 2 | 2 |
| 100 | 2 | 1 |
| 101 | 1 | 1 |
| 110 | 3 | 1 |
| 111 | The reference signal is not sent. | |

Compared with a case in which each time offset indicates three possible quantities of time segments, according to the indication information provided in Table 4, indication information bits can be reduced, to be specific, signaling overheads can be reduced. When the interval N is 4, the solution supports code division multiplexing of four time segment signals and two time segment signals, and the quantity of time segments may be notified to the user equipment by using signaling.

304. The UE sends a time segment signal of a reference signal to the base station on each of the M time segments.

After mapping the reference signal to the subcarrier, signals sent on different time segments are some time segment signals of the reference signal. Certainly, the UE may alternatively receive, on each of the M time segments, the time segment signal of the reference signal that is sent by the base station.

It should be understood that, sequence numbers of the foregoing processes do not mean execution sequences in various implementations of this application. The execution sequences of the processes should be determined based on functions and internal logic of the processes, and should not be construed as any limitation to the implementation processes of the implementations of this application.

Therefore, in the reference signal processing method in this implementation of this application, the UE receives the first indication information that is sent by the base station and that indicates the quantity M of time segments included in the target OFDM symbol, where a value of M is less than or equal to the quantity of subcarrier spacings between the neighboring subcarriers in frequency domain in the first subcarrier set used to carry the reference signal in the target OFDM symbol; determines M according to the first indication information; and then sends the time segment signal of the reference signal to the base station on each of the M time segments, or receives, on each of the M time segments, the time segment signal of the reference signal that is sent by the base station. In this way, the UE can multiplex a time frequency resource with another user equipment according to the indication of the base station, thereby improving time frequency resource utilization.

FIG. 14 is a schematic block diagram of user equipment UE 1000 according to an implementation of this application. As shown in FIG. 14, the UE 1000 includes:
a receiving unit 1010, configured to receive first indication information sent by a base station, where the first indication information is used to indicate a quantity M of time segments included in a target OFDM symbol, M≤N, N is a quantity of subcarrier spacings between neighboring subcarriers in frequency domain in a first subcarrier set used to carry a reference signal in the target OFDM symbol, and M and N are positive integers;
a processing unit 1020, configured to determine M according to the first indication information received by the receiving unit; and
a sending unit 1030, configured to send a time segment signal of the reference signal to the base station on each of the M time segments, or receive, by the UE on each of the M time segments, a time segment signal of the reference signal that is sent by the base station.

Optionally, the receiving unit 1010 is further configured to receive second indication information sent by the base station, the second indication information is used to indicate a frequency domain offset of a start location of the first subcarrier set in frequency domain, and the frequency domain offset is a quantity of subcarrier spacings between the start location and a reference location; the processing unit 1020 is further configured to determine the start location of the first subcarrier set in frequency domain based on the frequency domain offset; and the processing unit 1020 is further configured to determine the time segment signal of the reference signal based on the start location of the first subcarrier set in frequency domain.

Optionally, when the frequency domain offset of the start location of the first subcarrier set in frequency domain is a first frequency domain offset, M is any element in a first time segment quantity set; or when the frequency domain offset of the start location of the first subcarrier set in frequency domain is a second frequency domain offset, M is any element in a second time segment quantity set; and the first time segment quantity set is different from the second time segment quantity set, and the first frequency domain offset is different from the second frequency domain offset.

Therefore, the UE in this implementation of this application receives the first indication information that is sent by the base station and that indicates the quantity M of time segments included in the target OFDM symbol, where a value of M is less than or equal to the quantity of subcarrier spacings between the neighboring subcarriers in frequency domain in the first subcarrier set used to carry the reference signal in the target OFDM symbol; determines M according to the first indication information; and then sends the time segment signal of the reference signal to the base station on each of the M time segments, or receives, on each of the M time segments, the time segment signal of the reference signal that is sent by the base station. In this way, the UE can multiplex a time frequency resource with another user equipment according to the indication of the base station, thereby improving time frequency resource utilization.

FIG. 15 is a schematic block diagram of a base station 1100 according to an implementation of this application. As shown in FIG. 15, the base station 1100 includes:
a processing unit 1110, configured to determine a quantity M of time segments included in a target OFDM symbol, where M≤N, N is a quantity of subcarrier spacings between neighboring subcarriers in frequency domain in a first subcarrier set used to carry a reference signal in the target OFDM symbol, and M and N are positive integers;
a sending unit 1120, configured to send first indication information to user equipment UE, where the first indication information is used to instruct the UE to determine M; and
a receiving unit 1130, configured to: receive time segment signals of the reference signal that are sent by the UE on the M time segments, or send time segment signals of the reference signal on the M time segments.

Optionally, the sending unit 1120 is further configured to send second indication information to the UE, the second indication information is used to indicate a frequency domain offset of a start location of the first subcarrier set in frequency domain, and the frequency domain offset is a quantity of subcarrier spacings between the start location and a reference location.

Optionally, when the frequency domain offset of the start location of the first subcarrier set in frequency domain is a first frequency domain offset, M is any element in a first time segment quantity set; or when the frequency domain offset of the start location of the first subcarrier set in frequency domain is a second frequency domain offset, M is any element in a second time segment quantity set; and the first time segment quantity set is different from the second time segment quantity set, and the first frequency domain offset is different from the second frequency domain offset.

Therefore, the base station in this implementation of this application sends, to the UE, the first indication information indicating the quantity M of time segments included in the target OFDM symbol, and a value of M is less than or equal to the quantity of subcarrier spacings between the neighboring subcarriers in frequency domain in the first subcarrier set used to carry the reference signal in the target OFDM symbol, so that the UE determines M according to the first indication information, and then sends the time segment signal of the reference signal to the base station on each of the M time segments, or receives, on each of the M time segments, the time segment signal of the reference signal that is sent by the base station. In this way, the UE can multiplex a time frequency resource with another user equipment according to the indication of the base station, thereby improving time frequency resource utilization.

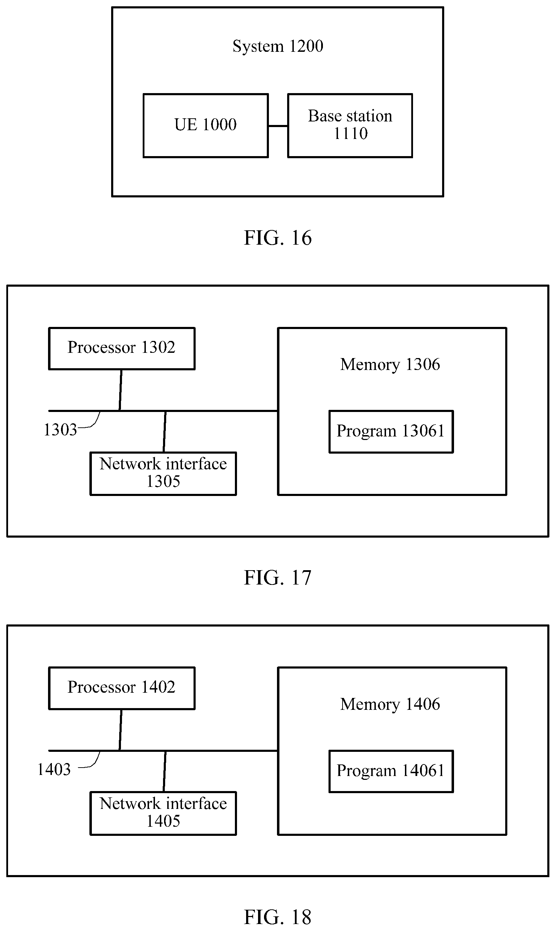

FIG. 16 is a signal processing system 1200 according to an implementation of this application. The system 1200 includes:
the UE 1000 according to the implementation shown in FIG. 14, and the base station 1100 shown in FIG. 15.

FIG. 17 is a schematic structural diagram of UE according to an implementation of this application. As shown in FIG. 17, the UE includes at least one processor 1302 (for example, a general-purpose processor CPU having computing and processing capabilities, a digital signal processor (DSP), an application-specific integrated circuit (ASIC), or a field programmable gate array (FPGA)), and the processor 1302 is configured to manage and schedule all modules and components in the UE. The processing unit 1020 in the implementation shown in FIG. 14 may be implemented by using the processor 1302. The UE further includes at least one transceiver 1305 (a receiver/sender 1305), a memory 1306, and at least one bus system 1303. The receiving unit 101 and the sending unit 1030 in the implementation shown in FIG. 14 may be implemented by using the transceiver 1305. All the components in the UE are coupled together by using the bus system 1303. The bus system 1303 may include a data bus, a power bus, a control bus, a status signal bus, and the like. However, for clarity of description, various buses are marked as the bus system 1303 in the figure.

The method disclosed in the foregoing implementations of this application may be applied to the processor 1302, or an executable module, for example, a computer program, stored in the memory 1306. The memory 1306 may include a high speed random access memory (Random Access Memory, RAM), and may further include a non-volatile memory (non-volatile memory). The memory may include a read-only memory and a random access memory, and provide required signaling or data, a required program, and the like to the processor. A part of the memory may further include a non-volatile random access memory (NVRAM). Communication connection with at least one other network element is implemented by using the at least one transceiver 1305 (which may be wired or wireless).

In some implementations, the memory 1306 stores a program 13061, and the processor 1302 executes the program 13061 to perform the following operations:
receiving, by using the transceiver 1305, first indication information sent by a base station, where the first indication information is used to indicate a quantity M of time segments included in a target OFDM symbol, M≤N, N is a quantity of subcarrier spacings between neighboring subcarriers in frequency domain in a first subcarrier set used to carry a reference signal in the target OFDM symbol, and M and N are positive integers;
determining M according to the first indication information; and
sending, by using the transceiver 1305, a time segment signal of the reference signal to the base station on each of the M time segments, or receiving, by using the transceiver 1305on each of the M time segments, a time segment signal of the reference signal that is sent by the base station.

It should be noted that, the UE may be specifically the UE in the foregoing implementations, and may be configured to perform the steps and/or procedures corresponding to the UE in the foregoing method implementations.

It can be learned from the foregoing technical solution provided in this implementation of this application that the first indication information that is sent by the base station and that indicates the quantity M of time segments included in the target OFDM symbol is received, where a value of M is less than or equal to the quantity of subcarrier spacings between the neighboring subcarriers in frequency domain in the first subcarrier set used to carry the reference signal in the target OFDM symbol, M is determined according to the first indication information, and then the time segment signal of the reference signal is sent to the base station on each of the M time segments, or the time segment signal of the reference signal that is sent by the base station is received on each of the M time segments. In this way, the UE can multiplex a time frequency resource with another user equipment according to the indication of the base station, thereby improving time frequency resource utilization.

FIG. 18 is a schematic structural diagram of a base station according to an implementation of this application. As shown in FIG. 18, the base station includes at least one processor 1402 (for example, a general-purpose processor CPU having computing and processing capabilities, a digital signal processor (DSP), an application-specific integrated circuit (ASIC), or a field programmable gate array (FPGA)), and the processor 1402 is configured to manage and schedule all modules and components in the base station. The processing unit 1110 in the implementation shown in FIG. 15 may be implemented by using the processor 1302. The base station further includes at least one transceiver 1405 (a receiver/sender 1405), a memory 1406, and at least one bus system 1403. The sending unit 1120 and the receiving unit 1130 in the implementation shown in FIG. 15 may be implemented by using the transceiver 1405. All the components in the base station are coupled together by using the bus system 1403. The bus system 1403 may include a data bus, a power bus, a control bus, a status signal bus, and the like. However, for clarity of description, various buses are marked as the bus system 1403 in the figure.

The method disclosed in the foregoing implementations of this application may be applied to the processor 1402, or an executable module, for example, a computer program, stored in the memory 1406. The memory 1406 may include a high speed random access memory (Random Access Memory, RAM), and may further include a non-volatile memory (non-volatile memory). The memory may include a read-only memory and a random access memory, and provide required signaling or data, a required program, and the like to the processor. A part of the memory may further include a non-volatile random access memory (NVRAM). Communication connection with at least one other network element is implemented by using the at least one transceiver 1405 (which may be wired or wireless).

In some implementations, the memory 1406 stores a program 14061, and the processor 1402 executes the program 14061 to perform the following operations:
determining a quantity M of time segments included in a target OFDM symbol, where M≤N, N is a quantity of subcarrier spacings between neighboring subcarriers in frequency domain in a first subcarrier set used to carry a reference signal in the target OFDM symbol, and M and N are positive integers;
sending, by using the transceiver 1405, first indication information to user equipment UE, where the first indication information is used to instruct the UE to determine M; and
receiving, by using the transceiver 1405, time segment signals of the reference signal that are sent by the UE on the M time segments, or sending time segment signals of the reference signal on the M time segments.

It should be noted that, the base station may be specifically the base station in the foregoing implementations, and may be configured to perform the steps and/or procedures corresponding to the base station in the foregoing method implementations.

It can be learned from the foregoing technical solution provided in this implementation of this application that the first indication information indicating the quantity M of time segments included in the target OFDM symbol is sent to the UE, and a value of M is less than or equal to the quantity of subcarrier spacings between the neighboring subcarriers in frequency domain in the first subcarrier set used to carry the reference signal in the target OFDM symbol, so that the UE determines M according to the first indication information, and then sends the time segment signal of the reference signal to the base station on each of the M time segments, or receives, on each of the M time segments, the time segment signal of the reference signal that is sent by the base station. In this way, the UE can multiplex a time frequency resource with another user equipment according to the indication of the base station, thereby improving time frequency resource utilization.

An implementation of this application further provides a computer storage medium, and the computer storage medium may store a program instruction used to perform any of the foregoing methods.

Optionally, the storage medium may be specifically the memory 1306 or the memory 1406.

It should be understood that, the term "and/or" in this specification describes only an association relationship for describing associated objects and represents that three relationships may exist. For example, A and/or B may represent the following three cases: Only A exists, both A and B exist, and only B exists.

It should be understood that sequence numbers of the foregoing processes do not mean execution sequences in various implementations of this application. The execution sequences of the processes should be determined based on functions and internal logic of the processes, and should not be construed as any limitation to the implementation processes of the implementations of this application.

A person of ordinary skill in the art may be aware that, in combination with examples of units and algorithm steps described in the implementations disclosed in this specification, this application may be implemented by using electronic hardware or a combination of computer software and electronic hardware. Whether the functions are performed by using hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the system, apparatus, and unit, refer to a corresponding process in the foregoing method implementations. Details are not described herein again.

In the several implementations provided in this application, it should be understood that the disclosed system, apparatus, and method may be implemented in other manners. For example, the described apparatus implementations are merely examples. For example, the unit division is merely logical function division and may be other division in actual implementations. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual needs to achieve the objectives of the solutions of the implementations.

In addition, functional units in the implementations of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the implementations of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The scope of protection shall be defined by the appended claims.

## Claims

1. A reference signal processing method, comprising:
when a user equipment, UE, is configured to transmit to a base station N training beams in different directions, each training beam is transmitted by mapping a reference signal to a corresponding subcarrier set in N subcarrier sets corresponding to a target OFDM symbol, wherein each subcarrier set comprises neighbouring subcarriers at an interval of N subcarriers in the target OFDM symbol, wherein N is a positive integer greater than 1; and
when a UE transmit power is less than a transmit energy requirement of N training beams,
receiving (302), by the UE, first indication information sent by the base station, wherein the first indication information is used to indicate M time segments into which a time domain signal waveform of the target OFDM symbol is to be divided, wherein M is positive integer and M≤N;
determining (303), by the UE, the M time segments according to the first indication information; and
sending (304), by the UE, the reference signal to the base station on each of the M time segments by mapping to a first subcarrier set.

2. The processing method according to claim 1, wherein the processing method further comprises:
receiving, by the UE, second indication information sent by the base station, wherein the second indication information is used to indicate a frequency domain offset of a start location of the first subcarrier set in frequency domain, and the frequency domain offset is a subcarrier spacing between the start location and a reference location;
determining, by the UE, the start location of the first subcarrier set in frequency domain based on the frequency domain offset; and
determining, by the UE, the time segment signal of the reference signal based on the start location of the first subcarrier set in frequency domain.

3. The processing method according to claim 1 or 2, wherein when the frequency domain offset of the start location of the first subcarrier set in frequency domain is a first frequency domain offset, the M time segments is any element in a first time segment quantity set; or when the frequency domain offset of the start location of the first subcarrier set in frequency domain is a second frequency domain offset, the M time segments is any element in a second time segment quantity set; and the first time segment quantity set is different from the second time segment quantity set, and the first frequency domain offset is different from the second frequency domain offset.

4. A reference signal processing method, comprising:
when a user equipment, UE, is configured to transmit to a base station N training beams in different directions, each training beam is transmitted by mapping a reference signal to a corresponding subcarrier set in N subcarrier sets corresponding to a target OFDM symbol, wherein each subcarrier set comprises neighbouring subcarriers at an interval of N subcarriers in the target OFDM symbol, wherein N is a positive integer greater than 1; and
when a UE transmit power is less than a transmit energy requirement of N training beams,
determining (301), by the base station, M time segments into which a time domain signal waveform of the target OFDM symbol is to be divided, wherein M is a positive integer and M≤N;
sending (302), by the base station, first indication information to the UE, wherein the first indication information is used to instruct the UE to determine the M time segments; and
receiving (304), by the base station, the reference signal sent by the UE on each of the M time segments by mapping to a first subcarrier set.

5. The processing method according to claim 4, wherein the processing method further comprises:
sending, by the base station, second indication information to the UE, wherein the second indication information is used to indicate a frequency domain offset of a start location of the first subcarrier set in frequency domain, and the frequency domain offset is a subcarrier spacing between the start location and a reference location.

6. The processing method according to claim 4 or 5, wherein when the frequency domain offset of the start location of the first subcarrier set in frequency domain is a first frequency domain offset, the M time segments is any element in a first time segment quantity set; or when the frequency domain offset of the start location of the first subcarrier set in frequency domain is a second frequency domain offset, the M time segments is any element in a second time segment quantity set; and the first time segment quantity set is different from the second time segment quantity set, and the first frequency domain offset is different from the second frequency domain offset.

7. User equipment UE, comprising:
a receiving unit (1010), configured to:
when a user equipment, UE, is configured to transmit to a base station N training beams in different directions, each training beam is transmitted by mapping a reference signal to a corresponding subcarrier set in N subcarrier sets corresponding to a target OFDM symbol, wherein each subcarrier set comprises neighbouring subcarriers at an interval of N subcarriers in the target OFDM symbol, wherein N is a positive integer greater than 1; and
when a UE transmit power is less than a transmit energy requirement of N training beams,
receive first indication information sent by the base station, wherein the first indication information is used to indicate M time segments into which a time domain signal waveform of the target OFDM symbol is to be divided, wherein M is positive integer and M≤N;
a processing unit (1020) configured to determine the M time segments according to the first indication information; and
a sending unit (1030) configured to send reference signal to the base station on each of the M time segments by mapping to a first subcarrier set.

8. The UE according to claim 7, wherein the receiving unit is further configured to receive second indication information sent by the base station, the second indication information is used to indicate a frequency domain offset of a start location of the first subcarrier set in frequency domain, and the frequency domain offset is a subcarrier spacing between the start location and a reference location;
the processing unit is further configured to determine the start location of the first subcarrier set in frequency domain based on the frequency domain offset; and
the processing unit is further configured to determine the time segment signal of the reference signal based on the start location of the first subcarrier set in frequency domain.

9. The UE according to claim 7 or 8, wherein when the frequency domain offset of the start location of the first subcarrier set in frequency domain is a first frequency domain offset, the M time segments is any element in a first time segment quantity set; or when the frequency domain offset of the start location of the first subcarrier set in frequency domain is a second frequency domain offset, the M time segments is any element in a second time segment quantity set; and the first time segment quantity set is different from the second time segment quantity set, and the first frequency domain offset is different from the second frequency domain offset.

10. A base station, comprising:
a processing unit (1110), configured to
when a user equipment, UE, is configured to transmit to a base station N training beams in different directions, each training beam is transmitted by mapping a reference signal to a corresponding subcarrier set in N subcarrier sets corresponding to a target OFDM symbol, wherein each subcarrier set comprises neighbouring subcarriers at an interval of N subcarriers in the target OFDM symbol, wherein N is a positive integer greater than 1; and
when a UE transmit power is less than a transmit energy requirement of N training beams,
determine M time segments into which a time domain signal waveform of the target OFDM symbol is to be divided, wherein M is a positive integer and M≤N;
a sending unit (1120), configured to send first indication information to the UE, wherein the first indication information is used to instruct the UE to determine the M time segments; and
a receiving unit (1130), configured to: receive the reference signal sent by the UE on each of the M time segments by mapping to a first subcarrier set.

11. The base station according to claim 10, wherein the sending unit is further configured to send second indication information to the UE, the second indication information is used to indicate a frequency domain offset of a start location of the first subcarrier set in frequency domain, and the frequency domain offset is a subcarrier spacing between the start location and a reference location.

12. The base station according to claim 10 or 11, wherein when the frequency domain offset of the start location of the first subcarrier set in frequency domain is a first frequency domain offset, the M time segments is any element in a first time segment quantity set; or when the frequency domain offset of the start location of the first subcarrier set in frequency domain is a second frequency domain offset, the M time segments is any element in a second time segment quantity set; and the first time segment quantity set is different from the second time segment quantity set, and the first frequency domain offset is different from the second frequency domain offset.

13. A computer program product comprising instructions which, when the program is executed by a computer, cause the computer to carry out the method according to any one of claims 1 to 6.

## Patentansprüche

1. Referenzsignalverarbeitungsverfahren, umfassend:
wenn ein Benutzergerät, UE, dazu konfiguriert ist, N Trainingsstrahlen in verschiedenen Richtungen an eine Basisstation zu übertragen, wird jeder Trainingsstrahl durch Abbilden eines Referenzsignals auf einen entsprechenden Unterträgersatz in N Unterträgersätzen entsprechend einem Ziel-OFDM-Symbol übertragen, wobei jeder Unterträgersatz benachbarte Unterträger in einem Intervall von N Unterträgern in dem Ziel-OFDM-Symbol umfasst, wobei N eine positive ganze Zahl größer als 1 ist; und
wenn ein UE-Übertragungsleistung geringer als eine Übertragungsenergieanforderung von N Trainingsstrahlen ist,
Empfangen (302) erster Anzeigeinformationen, die durch die Basisstation gesendet werden, durch das UE, wobei die ersten Anzeigeinformationen verwendet werden, um M Zeitsegmente anzuzeigen, in welche eine Signalwellenform von Zeitbereichen des Ziel-OFDM-Symbols zu unterteilen ist, wobei M eine positive ganze Zahl ist und M ≤ N;
Bestimmen (303) der M Zeitsegmente gemäß den ersten Anzeigeinformationen durch das UE; und
Senden (304) des Referenzsignals durch das UE an die Basisstation auf jedem der M Zeitsegmente durch Abbilden auf einen ersten Unterträgersatz.

2. Verarbeitungsverfahren nach Anspruch 1, wobei das Verarbeitungsverfahren ferner Folgendes umfasst:
Empfangen zweiter Anzeigeinformationen, die durch die Basisstation gesendet werden, durch das UE, wobei die zweiten Anzeigeinformationen verwendet werden, um einen Frequenzbereichsversatz einer Startposition des ersten Unterträgersatzes im Frequenzbereich anzuzeigen, und der Frequenzbereichsversatz ein Unterträgerabstand zwischen der Startposition und einer Referenzposition ist;
Bestimmen der Startposition des ersten Unterträgersatzes im Frequenzbereich durch das UE basierend auf dem Frequenzbereichsversatz; und
Bestimmen des Zeitsegmentsignals des Referenzsignals durch das UE basierend auf der Startposition des ersten Unterträgersatzes im Frequenzbereich.

3. Verarbeitungsverfahren nach Anspruch 1 oder 2, wobei, wenn der Frequenzbereichsversatz der Startposition des ersten Unterträgersatzes im Frequenzbereich ein erster Frequenzbereichsversatz ist, die M Zeitsegmente ein beliebiges Element in einem ersten Mengensatz von Zeitsegmenten ist; oder, wenn der Frequenzbereichsversatz der Startposition des ersten Unterträgersatzes im Frequenzbereich ein zweiter Frequenzbereichsversatz ist, die M Zeitsegmente ein beliebiges Element in einem zweiten Mengensatz von Zeitsegmenten ist; und sich der erste Mengensatz von Zeitsegmenten von dem zweiten Mengensatz von Zeitsegmenten unterscheidet und sich der erste Frequenzbereichsversatz von dem zweiten Frequenzbereichsversatz unterscheidet.

4. Referenzsignalverarbeitungsverfahren, umfassend:
wenn ein Benutzergerät, UE, dazu konfiguriert ist, N Trainingsstrahlen in verschiedenen Richtungen an eine Basisstation zu übertragen, wird jeder Trainingsstrahl durch Abbilden eines Referenzsignals auf einen entsprechenden Unterträgersatz in N Unterträgersätzen entsprechend einem Ziel-OFDM-Symbol übertragen, wobei jeder Unterträgersatz benachbarte Unterträger in einem Intervall von N Unterträgern in dem Ziel-OFDM-Symbol umfasst, wobei N eine positive ganze Zahl größer als 1 ist; und
wenn ein UE-Übertragungsleistung geringer als eine Übertragungsenergieanforderung von N Trainingsstrahlen ist,
Bestimmen (301) M Zeitsegmenten, in welche eine Signalwellenform von Zeitbereichen des Ziel-OFDM-Symbols zu unterteilen ist, durch die Basisstation, wobei M eine positive ganze Zahl ist und M ≤ N;
Senden (302) erster Anzeigeinformationen durch die Basisstation an das UE, wobei die ersten Anzeigeinformationen verwendet werden, um das UE anzuweisen, die M Zeitsegmente zu bestimmen; und
Empfangen (304) des Referenzsignals, das durch das UE an jedes der M Zeitsegmente gesendet wird, durch Abbilden auf einen ersten Unterträgersatz durch die Basisstation.

5. Verarbeitungsverfahren nach Anspruch 4, wobei das Verarbeitungsverfahren ferner Folgendes umfasst:
Senden zweiter Anzeigeinformationen durch die Basisstation an das UE, wobei die zweiten Anzeigeinformationen verwendet werden, um einen Frequenzbereichsversatz einer Startposition des ersten Unterträgersatzes im Frequenzbereich anzuzeigen, und der Frequenzbereichsversatz ein Unterträgerabstand zwischen der Startposition und einer Referenzposition ist.

6. Verarbeitungsverfahren nach Anspruch 4 oder 5, wobei, wenn der Frequenzbereichsversatz der Startposition des ersten Unterträgersatzes im Frequenzbereich ein erster Frequenzbereichsversatz ist, die M Zeitsegmente ein beliebiges Element in einem ersten Mengensatz von Zeitsegmenten ist; oder, wenn der Frequenzbereichsversatz der Startposition des ersten Unterträgersatzes im Frequenzbereich ein zweiter Frequenzbereichsversatz ist, die M Zeitsegmente ein beliebiges Element in einem zweiten Mengensatz von Zeitsegmenten ist; und sich der erste Mengensatz von Zeitsegmenten von dem zweiten Mengensatz von Zeitsegmenten unterscheidet und sich der erste Frequenzbereichsversatz von dem zweiten Frequenzbereichsversatz unterscheidet.

7. Benutzergerät, UE, umfassend:
eine Empfangseinheit (1010), die dazu konfiguriert ist:
wenn ein Benutzergerät, UE, dazu konfiguriert ist, N Trainingsstrahlen in verschiedenen Richtungen an eine Basisstation zu übertragen, wird jeder Trainingsstrahl durch Abbilden eines Referenzsignals auf einen entsprechenden Unterträgersatz in N Unterträgersätzen entsprechend einem Ziel-OFDM-Symbol übertragen, wobei jeder Unterträgersatz benachbarte Unterträger in einem Intervall von N Unterträgern in dem Ziel-OFDM-Symbol umfasst, wobei N eine positive ganze Zahl größer als 1 ist; und
wenn ein UE-Übertragungsleistung geringer als eine Übertragungsenergieanforderung von N Trainingsstrahlen ist,
erste Anzeigeinformationen, die durch die Basisstation gesendet werden, zu empfangen, wobei die ersten Anzeigeinformationen verwendet werden, um M Zeitsegmente anzuzeigen, in welche eine Signalwellenform von Zeitbereichen des Ziel-OFDM-Symbols zu unterteilen ist, wobei M eine positive ganze Zahl ist und M ≤ N; eine Verarbeitungseinheit (1020), die dazu konfiguriert ist, die M Zeitsegmente gemäß den ersten Anzeigeinformationen zu bestimmen; und
eine Sendeeinheit (1030), die dazu konfiguriert ist, das Referenzsignal an die Basisstation auf jedem der M Zeitsegmente durch Abbilden auf einen ersten Unterträgersatz zu senden.

8. UE nach Anspruch 7, wobei die Empfangseinheit ferner dazu konfiguriert ist, zweite Anzeigeinformationen, die durch die Basisstation gesendet werden, zu empfangen, die zweiten Anzeigeinformationen verwendet werden, um einen Frequenzbereichsversatz einer Startposition des ersten Unterträgersatzes im Frequenzbereich anzuzeigen, und der Frequenzbereichsversatz ein Unterträgerabstand zwischen der Startposition und einer Referenzposition ist;
die Verarbeitungseinheit ferner dazu konfiguriert ist, die Startposition des ersten Unterträgersatzes im Frequenzbereich basierend auf dem Frequenzbereichsversatz zu bestimmen; und
die Verarbeitungseinheit ferner dazu konfiguriert ist, das Zeitsegmentsignal des Referenzsignals basierend auf der Startposition des ersten Unterträgersatzes im Frequenzbereich zu bestimmen.

9. UE nach Anspruch 7 oder 8, wobei, wenn der Frequenzbereichsversatz der Startposition des ersten Unterträgersatzes im Frequenzbereich ein erster Frequenzbereichsversatz ist, die M Zeitsegmente ein beliebiges Element in einem ersten Mengensatz von Zeitsegmenten ist; oder, wenn der Frequenzbereichsversatz der Startposition des ersten Unterträgersatzes im Frequenzbereich ein zweiter Frequenzbereichsversatz ist, die M Zeitsegmente ein beliebiges Element in einem zweiten Mengensatz von Zeitsegmenten ist; und sich der erste Mengensatz von Zeitsegmenten von dem zweiten Mengensatz von Zeitsegmenten unterscheidet und sich der erste Frequenzbereichsversatz von dem zweiten Frequenzbereichsversatz unterscheidet.

10. Basisstation, umfassend:
eine Verarbeitungseinheit (1110), die dazu konfiguriert ist wenn ein Benutzergerät, UE, dazu konfiguriert ist, N Trainingsstrahlen in verschiedenen Richtungen an eine Basisstation zu übertragen, wird jeder Trainingsstrahl durch Abbilden eines Referenzsignals auf einen entsprechenden Unterträgersatz in N Unterträgersätzen entsprechend einem Ziel-OFDM-Symbol übertragen, wobei jeder Unterträgersatz benachbarte Unterträger in einem Intervall von N Unterträgern in dem Ziel-OFDM-Symbol umfasst, wobei N eine positive ganze Zahl größer als 1 ist; und
wenn ein UE-Übertragungsleistung geringer als eine Übertragungsenergieanforderung von N Trainingsstrahlen ist,
M Zeitsegmente, in welche eine Signalwellenform von Zeitbereichen des Ziel-OFDM-Symbols zu unterteilen ist, zu bestimmen, wobei M eine positive ganze Zahl ist und M ≤ N;
eine Sendeeinheit (1120), die dazu konfiguriert ist, erste Anzeigeinformationen an das UE zu senden, wobei die ersten Anzeigeinformationen verwendet werden, um das UE anzuweisen, die M Zeitsegmente zu bestimmen; und
eine Empfangseinheit (1130), die dazu konfiguriert ist: das Referenzsignal, das durch das UE an jedes der M Zeitsegmente gesendet wird, durch Abbilden auf einen ersten Unterträgersatz zu empfangen.

11. Basisstation nach Anspruch 10, wobei die Sendeeinheit ferner dazu konfiguriert ist, zweite Anzeigeinformationen an das UE zu senden, die zweiten Anzeigeinformationen verwendet werden, um einen Frequenzbereichsversatz einer Startposition des ersten Unterträgersatzes im Frequenzbereich anzuzeigen, und der Frequenzbereichsversatz ein Unterträgerabstand zwischen der Startposition und einer Referenzposition ist.

12. Basisstation nach Anspruch 10 oder 11, wobei, wenn der Frequenzbereichsversatz der Startposition des ersten Unterträgersatzes im Frequenzbereich ein erster Frequenzbereichsversatz ist, die M Zeitsegmente ein beliebiges Element in einem ersten Mengensatz von Zeitsegmenten ist; oder, wenn der Frequenzbereichsversatz der Startposition des ersten Unterträgersatzes im Frequenzbereich ein zweiter Frequenzbereichsversatz ist, die M Zeitsegmente ein beliebiges Element in einem zweiten Mengensatz von Zeitsegmenten ist; und sich der erste Mengensatz von Zeitsegmenten von dem zweiten Mengensatz von Zeitsegmenten unterscheidet und sich der erste Frequenzbereichsversatz von dem zweiten Frequenzbereichsversatz unterscheidet.

13. Computerprogrammprodukt, umfassend Anweisungen, welche bei Ausführung des Programms durch einen Computer bewirken, dass der Computer das Verfahren nach einem der Ansprüche 1 bis 6 durchführt.

## Revendications

1. Procédé de traitement de signal de référence, comprenant :
lorsqu'un équipement utilisateur, UE, est configuré pour transmettre à une station de base N faisceaux d'entraînement dans différentes directions, chaque faisceau d'entraînement est transmis en mappant un signal de référence sur un ensemble de sous-porteuses correspondant dans N ensembles de sous-porteuses correspondant à un symbole OFDM cible, dans lequel chaque ensemble de sous-porteuses comprend des sous-porteuses voisines à un intervalle de N sous-porteuses dans le symbole OFDM cible, dans lequel N est un entier positif supérieur à 1 ; et
lorsqu'une puissance de transmission d'UE est inférieure à une exigence d'énergie de transmission de N faisceaux d'entraînement,
la réception (302), par l'UE, de premières informations d'indication envoyées par la station de base, dans lequel les premières informations d'indication sont utilisées pour indiquer M segments temporels dans lesquels une forme d'onde de signal de domaine temporel du symbole OFDM cible doit être divisée, dans lequel M est un entier positif et M ≤ N ;
la détermination (303), par l'UE, les M segments temporels selon les premières informations d'indication ; et
l'envoi (304), par l'UE, du signal de référence à la station de base sur chacun des M segments temporels en mappant sur un premier ensemble de sous-porteuses.

2. Procédé de traitement selon la revendication 1, dans lequel le procédé de traitement comprend également :
la réception, par l'UE, de secondes informations d'indication envoyées par la station de base, dans lequel les secondes informations d'indication sont utilisées pour indiquer un décalage de domaine fréquentiel d'un emplacement de départ du premier ensemble de sous-porteuses dans le domaine fréquentiel, et le décalage de domaine fréquentiel est un espacement de sous-porteuses entre l'emplacement de départ et un emplacement de référence ;
la détermination, par l'UE, de l'emplacement de départ du premier ensemble de sous-porteuses dans le domaine fréquentiel sur la base du décalage de domaine fréquentiel ; et
la détermination, par l'UE, du signal de segment temporel du signal de référence sur la base de l'emplacement de départ du premier ensemble de sous-porteuses dans le domaine fréquentiel.

3. Procédé de traitement selon la revendication 1 ou 2, dans lequel lorsque le décalage de domaine fréquentiel de l'emplacement de départ du premier ensemble de sous-porteuses dans le domaine fréquentiel est un premier décalage de domaine fréquentiel, M segments temporels est un élément quelconque dans un premier ensemble de quantités de segments temporels ; ou lorsque le décalage de domaine fréquentiel de l'emplacement de départ du premier ensemble de sous-porteuses dans le domaine fréquentiel est un second décalage de domaine fréquentiel, M segments temporels est un élément quelconque dans un second ensemble de quantités de segments temporels ; et le premier ensemble de quantités de segments temporels est différent du second ensemble de quantités de segments temporels, et le premier décalage de domaine fréquentiel est différent du second décalage de domaine fréquentiel.

4. Procédé de traitement de signal de référence, comprenant :
lorsqu'un équipement utilisateur, UE, est configuré pour transmettre à une station de base N faisceaux d'entraînement dans différentes directions, chaque faisceau d'entraînement est transmis en mappant un signal de référence sur un ensemble de sous-porteuses correspondant dans N ensembles de sous-porteuses correspondant à un symbole OFDM cible, dans lequel chaque ensemble de sous-porteuses comprend des sous-porteuses voisines à un intervalle de N sous-porteuses dans le symbole OFDM cible, dans lequel N est un entier positif supérieur à 1 ; et
lorsqu'une puissance de transmission d'UE est inférieure à une exigence d'énergie de transmission de N faisceaux d'entraînement,
la détermination (301), par la station de base, de M segments temporels dans lesquels une forme d'onde de signal de domaine temporel du symbole OFDM cible doit être divisée, dans lequel M est un entier positif et M ≤ N ;
l'envoi (302), par la station de base, de premières informations d'indication à l'UE, dans lequel les premières informations d'indication sont utilisées pour ordonner à l'UE de déterminer M segments temporels; et
l'envoi (304), par la station de base, du signal de référence envoyé par l'UE sur chacun des M segments temporels en mappant sur un premier ensemble de sous-porteuses.

5. Procédé de traitement selon la revendication 4, dans lequel le procédé de traitement comprend également :
l'envoi, par la station de base, de secondes informations d'indication à l'UE, dans lequel les secondes informations d'indication sont utilisées pour indiquer un décalage de domaine fréquentiel d'un emplacement de départ du premier ensemble de sous-porteuses dans le domaine fréquentiel, et le décalage de domaine fréquentiel est un espacement de sous-porteuses entre l'emplacement de départ et un emplacement de référence.

6. Procédé de traitement selon la revendication 4 ou 5, dans lequel lorsque le décalage de domaine fréquentiel de l'emplacement de départ du premier ensemble de sous-porteuses dans le domaine fréquentiel est un premier décalage de domaine fréquentiel, M segments temporels est un élément quelconque dans un premier ensemble de quantités de segments temporels ; ou lorsque le décalage de domaine fréquentiel de l'emplacement de départ du premier ensemble de sous-porteuses dans le domaine fréquentiel est un second décalage de domaine fréquentiel, M segments temporels est un élément quelconque dans un second ensemble de quantités de segments temporels ; et le premier ensemble de quantités de segments temporels est différent du second ensemble de quantités de segments temporels, et le premier décalage de domaine fréquentiel est différent du second décalage de domaine fréquentiel.

7. Équipement utilisateur UE, comprenant :
une unité de réception (1010), configurée pour :
lorsqu'un équipement utilisateur, UE, est configuré pour transmettre à une station de base N faisceaux d'entraînement dans différentes directions, chaque faisceau d'entraînement est transmis en mappant un signal de référence sur un ensemble de sous-porteuses correspondant dans N ensembles de sous-porteuses correspondant à un symbole OFDM cible, dans lequel chaque ensemble de sous-porteuses comprend des sous-porteuses voisines à un intervalle de N sous-porteuses dans le symbole OFDM cible, dans lequel N est un entier positif supérieur à 1 ; et
lorsqu'une puissance de transmission d'UE est inférieure à une exigence d'énergie de transmission de N faisceaux d'entraînement,
recevoir de premières informations d'indication envoyées par la station de base, dans lequel les premières informations d'indication sont utilisées pour indiquer M segments temporels dans lesquels une forme d'onde de signal de domaine temporel du symbole OFDM cible doit être divisée, dans lequel M est un entier positif et M ≤ N ;
une unité de traitement (1020) configurée pour déterminer M segments temporels selon les premières informations d'indication ; et
une unité d'envoi (1030) configurée pour envoyer un signal de référence à la station de base sur chacun des M segments temporels en mappant sur un premier ensemble de sous-porteuses.

8. UE selon la revendication 7, dans lequel l'unité de réception est également configurée pour recevoir de secondes informations d'indication envoyées par la station de base, dans lequel les secondes informations d'indication sont utilisées pour indiquer un décalage de domaine fréquentiel d'un emplacement de départ du premier ensemble de sous-porteuses dans le domaine fréquentiel, et le décalage de domaine fréquentiel est un espacement de sous-porteuses entre l'emplacement de départ et un emplacement de référence ;
l'unité de traitement est également configurée pour déterminer l'emplacement de départ du premier ensemble de sous-porteuses dans le domaine fréquentiel sur la base du décalage de domaine fréquentiel ; et
l'unité de traitement est également configurée pour déterminer le signal de segment temporel du signal de référence sur la base de l'emplacement de départ du premier ensemble de sous-porteuses dans le domaine fréquentiel.

9. UE selon la revendication 7 ou 8, dans lequel lorsque le décalage de domaine fréquentiel de l'emplacement de départ du premier ensemble de sous-porteuses dans le domaine fréquentiel est un premier décalage de domaine fréquentiel, M segments temporels est un élément quelconque dans un premier ensemble de quantités de segments temporels ; ou lorsque le décalage de domaine fréquentiel de l'emplacement de départ du premier ensemble de sous-porteuses dans le domaine fréquentiel est un second décalage de domaine fréquentiel, M segments temporels est un élément quelconque dans un second ensemble de quantités de segments temporels ; et le premier ensemble de quantités de segments temporels est différent du second ensemble de quantités de segments temporels, et le premier décalage de domaine fréquentiel est différent du second décalage de domaine fréquentiel.

10. Station de base, comprenant :
une unité de traitement (1110), configurée pour lorsqu'un équipement utilisateur, UE, est configuré pour transmettre à une station de base N faisceaux d'entraînement dans différentes directions, chaque faisceau d'entraînement est transmis en mappant un signal de référence sur un ensemble de sous-porteuses correspondant dans N ensembles de sous-porteuses correspondant à un symbole OFDM cible, dans lequel chaque ensemble de sous-porteuses comprend des sous-porteuses voisines à un intervalle de N sous-porteuses dans le symbole OFDM cible, dans lequel N est un entier positif supérieur à 1 ; et
lorsqu'une puissance de transmission d'UE est inférieure à une exigence d'énergie de transmission de N faisceaux d'entraînement,
déterminer M segments temporels dans lesquels une forme d'onde de signal de domaine temporel du symbole OFDM cible doit être divisée, dans lequel M est un entier positif et M ≤ N ;
une unité d'envoi (1120) configurée pour envoyer de premières informations d'indication à l'UE, dans lequel les premières informations d'indication sont utilisées pour ordonner à l'UE de déterminer M segments temporels; et
une unité de réception (1130) configurée pour : recevoir le signal de référence envoyé par l'UE sur chacun des M segments temporels en mappant sur un premier ensemble de sous-porteuses.

11. Station de base selon la revendication 10, dans lequel l'unité d'envoi est également configurée pour envoyer de secondes informations d'indication à l'UE, les secondes informations d'indication sont utilisées pour indiquer un décalage de domaine fréquentiel d'un emplacement de départ du premier ensemble de sous-porteuses dans le domaine fréquentiel, et le décalage de domaine fréquentiel est un espacement de sous-porteuses entre l'emplacement de départ et un emplacement de référence.

12. Station de base selon la revendication 10 ou 11, dans lequel lorsque le décalage de domaine fréquentiel de l'emplacement de départ du premier ensemble de sous-porteuses dans le domaine fréquentiel est un premier décalage de domaine fréquentiel, M segments temporels est un élément quelconque dans un premier ensemble de quantités de segments temporels ; ou lorsque le décalage de domaine fréquentiel de l'emplacement de départ du premier ensemble de sous-porteuses dans le domaine fréquentiel est un second décalage de domaine fréquentiel, M segments temporels est un élément quelconque dans un second ensemble de quantités de segments temporels ; et le premier ensemble de quantités de segments temporels est différent du second ensemble de quantités de segments temporels, et le premier décalage de domaine fréquentiel est différent du second décalage de domaine fréquentiel.

13. Produit de programme informatique comprenant des instructions qui, lorsque le programme est exécuté par un ordinateur, amènent l'ordinateur à mettre en œuvre le procédé selon l'une quelconque des revendications 1 à 6.
